# EUROPÄISCHE PATENTSCHRIFT

(11) **EP 3 666 052 B1**
(45) Veröffentlichungstag und Bekanntmachung des Hinweises auf die Patenterteilung: **03.03.2021**
(21) Anmeldenummer: 18212549.2
(22) Anmeldetag: 14.12.2018
(51) Int. Cl.: A01C 15/00, A01C 7/06

(54) **TANKBEHÄLTER FÜR EINE SÄMASCHINE UND SÄMASCHINE**
HOPPER FOR A SOWING MACHINE AND SOWING MACHINE
RÉSERVOIR POUR UN SEMOIR ET SEMOIR

(43) Veröffentlichungstag der Anmeldung: 17.06.2020
(73) Patentinhaber: Kverneland A/S, 4353 Klepp Stasjon (NO)
(72) Erfinder: Ehlers, Rainer, 4353 Klepp Stasjon (NO)
(74) Vertreter: Bittner, Thomas L.

(56) Entgegenhaltungen:
- DE-A1- 3 503 835
- GB-A- 1 212 439
- US-A- 5 927 217
- US-A1- 2005 241 070

## Beschreibung

Die Erfindung betrifft einen Tank- oder Zentralbehälter für eine Sämaschine sowie eine Sämaschine.

### Hintergrund

Ein Zentral- oder Tankbehälter für eine Sämaschine ist aus dem Dokument DE 26 52 911 A1 bekannt. Der Tankbehälter dient dazu, ein Saatgut aufzunehmen, welches aus diesem Zentralbehälter dann auf verschiedene Säeinrichtungen verteilt wird, um das Saatgut dann auszusäen. Bei dem Zentralbehälter erfolgt die Ausgabe des hierin aufgenommenen Saatguts über einen Behältersumpf, der im Boden des Zentral- oder Tankbehälters angeordnet ist.

Das Dokument US 2005/0241070 A1 beschreibt eine pneumatische Sämaschine mit zwei Tanks für das Aufnehmen von Samen oder anderer Partikel. Jeder Tank hat unten eine Dosiervorrichtung, um den Inhalt der Tanks dosiert auszubringen. Eine Platte ist so positioniert, dass sie ein Loch zwischen den beiden Tanks abdeckt und freigibt, so dass sie den Inhalt eines Tanks in den anderen leiten und auch die Dosiervorrichtung des einen Tanks blockieren kann. Die Platte ist mit einem Griff verbunden, der sich aus dem Tank heraus erstreckt, so dass der Bediener die Platte bewegen kann, ohne den Tank zu betreten.

### Zusammenfassung

Aufgabe der Erfindung ist es, einen Tankbehälter für eine Sämaschine sowie eine Sämaschine anzugeben, bei denen der Tankbehälter für die Nutzung bei unterschiedlichen Arbeitsaufgaben flexibel anpassbar ist.

Zur Lösung ist ein Tankbehälter für eine Sämaschine nach dem unabhängigen Anspruch 1 geschaffen. Weiterhin ist eine Sämaschine nach dem nebengeordneten Anspruch 10 geschaffen. Ausgestaltungen sind Gegenstand von abhängigen Unteransprüchen.

Nach einem Aspekt ist ein Tankbehälter für eine Sämaschine geschaffen, welcher eine Behälterwand, die ein Behältervolumen mehrseitig umgibt, und eine Teilungswand aufweist, die in dem Behältervolumen dieses in Teilvolumen aufteilend angeordnet ist, derart, dass ein erstes und ein zweites Teilvolumen gebildet sind, welche mittels der Teilungswand voneinander getrennt und eingerichtet sind, jeweils ein granulatartiges Material wie Saatkörner, Düngemittel oder dergleichen aufzunehmen. Ein erster Behältersumpf ist einer ersten Bodenöffnung im Bereich des ersten Teilvolumens zugeordnet und eingerichtet, das granulatartige Material in dem ersten Teilvolumen aus dem Behältervolumen auszubringen. Ein zweiter Behältersumpf ist einer zweiten Bodenöffnung im Bereich des zweiten Teilvolumens zugeordnet und eingerichtet, das granulatartige Material in dem zweiten Teilvolumen aus dem Behältervolumen auszubringen. In der Teilungswand ist eine Wandöffnung vorgesehen, durch welche hindurch das granulatartige Material von dem ersten in das zweite Teilvolumen und umgekehrt gelangen kann, wenn die Wandöffnung geöffnet oder freigegeben ist. Der Tankbehälter weist ein Verschlussbauteil auf, welches zwischen einer ersten und einer zweiten Stellung verlagerbar ist, derart, dass das Verschlussbauteil beim Verlagern von der ersten in die zweite Stellung die erste Bodenöffnung öffnet und die Wandöffnung verschließt und beim Verlagern von der zweiten in die erste Stellung die Wandöffnung öffnet und die erste Bodenöffnung verschließt.

Weiterhin ist eine Sämaschine mit einem solchen Tankbehälter geschaffen.

Der Tankbehälter dient bei der Sämaschine als zentraler Behälter zur Aufnahme granulatartigen Materials, welches aus dem Zentralbehälter regelmäßig zu mehreren Säreihen transportiert wird, die jeweils dazu dienen, das granulatartige Material auf und in den Erdboden auszubringen, insbesondere in eine Saatfurche. Der Tankbehälter verfügt mit dem ersten und dem zweiten Teilvolumen über Behälterteilvolumen, die mit dem gleichen oder unterschiedlichen granulatartigen Material befüllt werden können. Über einen jeweils zugeordneten Behältersumpf kann das granulatartige Material aus den Teilvolumen ausgebracht werden. Beispielsweise können das erste und das zweite Teilvolumen unterschiedliche Saatkörner aufnehmen. In einer anderen Betriebsart nimmt das erste Teilvolumen Saatkörner auf, wohingegen in dem zweiten Teilvolumen ein Düngemittel aufgenommen ist, welches zusammen mit den Saatkörnern dosiert auszubringen ist.

Der Tankbehälter kann auf einer Sämaschine angeordnet sein, die als Anhängefahrzeug ausgestaltet ist. In einer alternativen Ausgestaltung kann der Tank- oder Zentralbehälter von einem Traktor getragen werden.

Die vorgesehen Verlagerbarkeit des Verschlussbauteils ermöglicht es, den Tankbehälter für unterschiedliche Betriebsarten der Sämaschine herzurichten. Ist das Verschlussbauteil so angeordnet, dass hiermit die erste Bodenöffnung in dem ersten Teilvolumen geschlossen ist, ist hierdurch die Wandöffnung in der Teilungswand freigegeben, sodass das erste und das zweite Teilvolumen hierüber miteinander verbunden sind, derart, dass das granulatartige Material von dem einen in das andere Teilvolumen gelangen kann. Das Ausbringen des granulatartigen Materials kann dann über die zweite Bodenöffnung erfolgen. Verschließt das Verschlussbauteil die Wandöffnung, sind das erste und das zweite Teilvolumen vollständig voneinander getrennt, sodass hierin jeweils ein granulatartiges Material aufgenommen werden kann, insbesondere unterschiedliche Materialien. Die Abgabe der granulatartigen Materialien kann dann aus dem ersten Teilvolumen über die erste Bodenöffnung und aus dem zweiten Teilvolumen über die zweite Bodenöffnung erfolgen.

Das Verschlussbauteil ist mittels Schwenken zwischen der ersten und der zweiten Stellung verlagerbar. Das Verschlussbauteil ist hierbei mindestens zwischen einer ersten und einer zweiten Schwenkstellung verlagerbar, in denen das Verschlussbauteil selbst entweder die Wandöffnung oder die erste Bodenöffnung verschließt.

Das Verschlussbauteil ist in einem Eckbereich schwenkbar gelagert , in welchem die Teilungswand an einen Boden der Behälterwand stößt. Hierbei ist die Schwenkachse fürs Schwenken des Verschlussbauteils in dem Eckbereich angeordnet.

In dem Eckbereich können Wandabschnitte aneinanderstoßen, die den ersten und den zweiten Behältersumpf begrenzen. Alternativ können Verlängerungen solcher Wandabschnitte des ersten und des zweiten Behältersumpfes in dem Eckbereich aneinander stoßend angeordnet sein.

In dem Eckbereich können die erste Bodenöffnung und die Wandöffnung benachbart zueinander angeordnet sein. Insbesondere die Wandöffnung kann sich bei dieser oder anderen Ausführungsformen bis zum Eckbereich erstrecken, sodass bei offener Wandöffnung ein Übergang des granulatartigen Materials zwischen dem ersten und dem zweiten Teilvolumen erleichtert ist.

Die Wandöffnung kann in einem aufrechtstehenden Wandabschnitt der Teilungswand angeordnet sein. Der aufrecht stehende Wandabschnitt kann vertikal ausgerichtet sein.

Die erste Bodenöffnung und die Wandöffnung können wenigstens hinsichtlich eines Öffnungsparameters aus der folgende Gruppe gleich ausgebildet sein: Umfangsform und Öffnungsfläche. Eine gleichartige Ausbildung der Öffnungen unterstützt ein möglichst dichtes Abschließen der jeweiligen Öffnung durch das Verschlussbauteil.

Das Verschlussbauteil kann wenigstens einer der folgenden Ausgestaltungen entsprechend ausgeführt sein: In der ersten Stellung überlappt das Verschlussbauteil zum Dichten um die erste Bodenöffnung herum mehrseitig mit einem die erste Bodenöffnung umgebenden Rand; und in der zweiten Stellung überlappt das Verschlussbauteil zum Dichten um die Wandöffnung herum mehrseitig mit einem die Wandöffnung umgebenden Rand. In dem randseitigen Überlappungsbereich kann ein Flachabschnitt des Verschlussbauteils eben auf einer ebenen Auflagefläche im Bereich des umgebenden Rands der jeweiligen Öffnung aufliegen. Im Überlappungsbereich kann eine Dichtungseinrichtung vorgesehen sein, beispielweise in Form einer mehrseitig oder allseitig umlaufenden Dichtung, zum Beispiel einer Kunststoff- oder Gummidichtung. In einer alternativen Ausführungsform liegen ebene Metallflächen des Verschlussbauteils einerseits und des umgebenen Rands der jeweiligen Öffnung andererseits eben aufeinander. In einer Ausgestaltung ist das Verschlussbauteil zumindest stückweise aus einem Kunststoffmaterial.

Das Verschlussbauteil kann mit einer Verschlussplatte gebildet sein.

Dem Verschlussbauteil kann eine Sicherungseinrichtung zugeordnet sein, mit der das Verschlussbauteil in der ersten und / oder der zweiten Stellung gegen ein unbeabsichtigtes Lösen aus der jeweiligen Stellung gesichert ist. Die Sicherungseinrichtung kann beispielweise Schrauben umfassen, insbesondere Flügelschrauben, mit denen das Verschlussbauteil in der jeweiligen Stellung gegen ein unbeabsichtigtes Verlagern gesichert werden kann. Auch ein magnetischer Sicherungsmechanismus kann vorgesehen sein, um das Verschlussbauteil in der jeweiligen Stellung zu halten.

An dem Verschlussbauteil kann eine Griffeinrichtung angeordnet sein. Die Griffeinrichtung kann von einem Nutzer gegriffen werden, um das Verschlussbauteil zwischen der ersten und der zweiten Stellung zu verlagern, insbesondere zu schwenken.

Die Teilungswand weist einen verlagerbaren Wandabschnitt auf, mittels dessen Verlagerung zwischen einer ersten und einer zweiten Verlagerungsstellung ein Volumenverhältnis zwischen dem ersten und dem zweiten Teilvolumen veränderbar ist. Der verlagerbare Wandabschnitt kann zwischen der ersten und der zweiten Verlagerungsstellung verschwenkbar sein. Der verlagerbare Wandabschnitt bildet einen oberen Teil der Teilungswand , welcher benachbart zur deckseitigen Öffnung des Tank- oder Zentralbehälters angeordnet ist. Es können mehr als zwei Verlagerungsstellungen für den verlagerbaren Wandabschnitt vorgesehen sein, um weitere Volumenverhältnisse zwischen ersten und dem zweiten Teilvolumen einzustellen. Mehr als ein Wandabschnitt der Teilungswand können zum Einstellen der Volumenverhältnisse verlagerbar sein.

### Beschreibung von weiteren Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung eines Tank- oder Zentralbehälters für eine Sämaschine im Schnitt, wobei mittels eines Verschlussbauteils eine erste Bodenöffnung zu einem ersten Behältersumpf hin verschlossen ist;
- Fig. 2: eine schematische perspektivische Darstellung des Tankbehälters aus Fig. 1 im Schnitt, wobei mittels des Verschlussbauteils nun eine Wandöffnung in einer Teilungswand verschlossen ist; und
- Fig. 3: eine schematische perspektivische Darstellung des Tankbehälters aus Fig. 1 im Schnitt, wobei bei geschlossener Bodenöffnung ein verlagerbarer Wandabschnitt der Teilungswand verlagert ist.

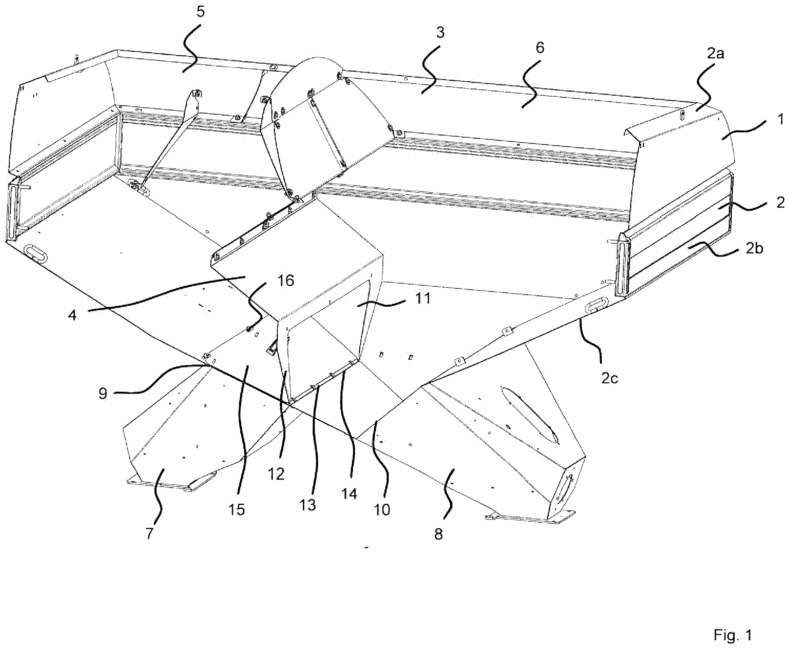

Fig. 1 zeigt eine schematische perspektivische Darstellung eines Tank- oder Zentralbehälters 1 für eine Sämaschine mit einer Behälterwand 2, die ein Behältervolumen 3 umgibt. Die Behälterwand 2 ist bei der gezeigten Ausführungsform mehrstückig ausgebildet, mit Teilwänden 2a, 2b, 2c. Die Teilwände 2a, 2b, 2c sind miteinander montiert, sei es lösbar oder nicht lösbar, um das Behältervolumen 3 bereitzustellen, welches der Aufnahme eines oder mehrerer granulatartiger Materialien wie Saatkörner, Düngemittel oder dergleichen dient, die mit Hilfe einer Sä- oder Drillmaschine auszubringen sind.

Das Behältervolumen 3 wird mit Hilfe einer Teilungswand 4, die in der gezeigten Ausführungsform mehrstückig ausgeführt ist, in ein erstes Teilvolumen 5 und ein zweites Teilvolumen 6 unterteilt. Dem ersten und dem zweiten Teilvolumen 5, 6 ist ein erster und ein zweiter Behältersumpf 7, 8 zugeordnet, über den das in dem jeweiligen Teilvolumen aufgenommen granulatartige Material ausgebracht werden kann, insbesondere hin zu einer oder mehreren Säreihen (nicht dargestellt), über die das Material dann auf das Feld ausgebracht wird. Hierzu schließen der erste und der zweite Behältersumpf 7, 8 an eine erste und eine zweite Bodenöffnung 9, 10, die dem ersten beziehungsweise dem zweiten Teilvolumen 5, 6 zugeordnet sind.

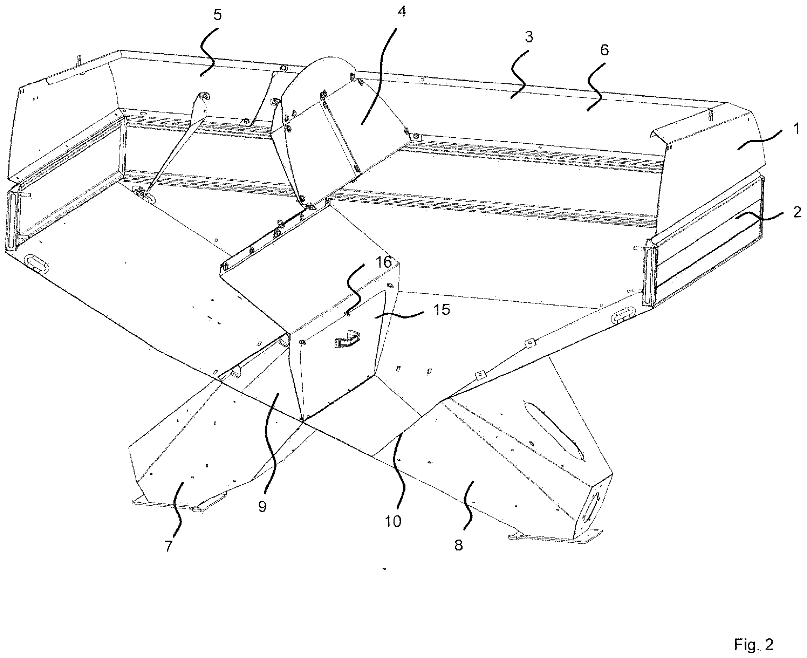

Die Teilungswand 4 weist eine Wandöffnung 11 auf, die bei dem gezeigten Ausführungsbeispiel in einem aufrecht stehenden Wandabschnitt 12 der Teilungswand 4 angeordnet ist, derart, dass sich die Wandöffnung 11 bis zu einem bodenseitigen Knickbereich 13 erstreckt, in welchem eine Schwenkachse 14 eines Verschlussbauteils 15 ausgebildet ist, welches in der in Fig. 1 gezeigten Darstellung die erste Bodenöffnung 9 verschließt. Das Verschlussbauteil 15 kann um die Schwenkachse 14 geschwenkt werden, um die Wandöffnung 11 zu verschließen und hierdurch die erste Bodenöffnung 9 freizugeben, wie dies Fig. 2 zeigt. Zur Sicherung des Verschlussbauteils 15 in der jeweiligen Stellung ist eine Sicherungseinrichtung 16 vorgesehen, die bei der gezeigten Ausführungsform beispielhaft Flügelschrauben umfasst.

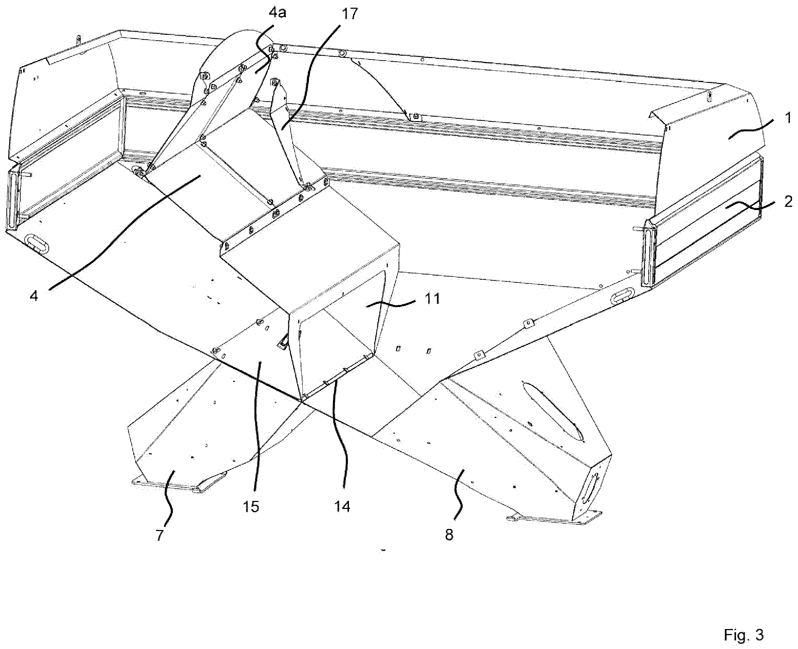

Gemäß Fig. 3 ist ein verlagerbarer Wandabschnitt 4a der Teilungswand 4 schwenkbar gelagert, sodass mittels Schwenken des verlagerbaren Wandabschnitts 4a das Volumenverhältnis zwischen dem ersten und dem zweiten Teilvolumen 5, 6 verändert werden kann. Zur Sicherung des verlagerbaren Wandabschnitts 4a ist ein Haltebauteil 17 vorgesehen (vgl. Fig. 3).

Die in der vorstehenden Beschreibung, den Ansprüchen und der Zeichnung offenbarten Merkmale können sowohl einzeln als auch in beliebiger Kombination für die Verwirklichung der verschiedenen Ausführungen von Bedeutung sein.

## Patentansprüche

1. Tankbehälter (1) für eine Sämaschine, mit:
- einer Behälterwand (2), die ein Behältervolumen (3) mehrseitig umgibt;
- einer Teilungswand (4), die in dem Behältervolumen (3) dieses in Teilvolumen aufteilend angeordnet ist, derart, dass ein erstes und ein zweites Teilvolumen (5, 6) gebildet sind, welche mittels der Teilungswand (4) voneinander getrennt und eingerichtet sind, jeweils ein granulatartiges Material wie Saatkörner, Düngermittel oder dergleichen aufzunehmen;
- einem ersten Behältersumpf (7), welcher einer ersten Bodenöffnung (9) im Bereich des ersten Teilvolumens (5) zugeordnet und eingerichtet ist, das granulatartige Material in dem ersten Teilvolumen (5) aus dem Behältervolumen auszubringen;
- einem zweiten Behältersumpf (8), welcher einer zweiten Bodenöffnung (10) im Bereich des zweiten Teilvolumens (6) zugeordnet und eingerichtet ist, das granulatartige Material in dem zweiten Teilvolumen (6) aus dem Behältervolumen (3) auszubringen;
- einer Wandöffnung (11) in der Teilungswand (4), durch welche hindurch das granulatartige Material von dem ersten in das zweite Teilvolumen (5, 6) und umgekehrt gelangen kann, wenn die Wandöffnung (11) geöffnet ist; und
- einem Verschlussbauteil (15), welches in einem Eckbereich (13) schwenkbar gelagert ist, in dem die Teilungswand (4) an einen Boden der Behälterwand (2) stößt, und zwischen einer ersten und einer zweiten Stellung verschwenkbar ist, derart, dass das Verschlussbauteil (15)
- beim Verlagern von der ersten in die zweite Stellung die erste Bodenöffnung (9) öffnet und die Wandöffnung (11) verschließt und
- beim Verlagern von der zweiten in die erste Stellung die Wandöffnung (11) öffnet und die erste Bodenöffnung (9) verschließt;
**dadurch gekennzeichnet, dass** die Teilungswand (4) einen verlagerbaren Wandabschnitt (4a) aufweist, welcher einen oberen Teil der Teilungswand (4) bildet, der benachbart zu einer deckseitigen Öffnung des Tankbehälters (1) angeordnet ist, und mittels dessen Verlagerung zwischen einer ersten und einer zweiten Verlagerungsstellung ein Volumenverhältnis zwischen dem ersten und dem zweiten Teilvolumen (5, 6) veränderbar ist.

2. Tankbehälter (1) nach Anspruch 1, **dadurch gekennzeichnet, dass** in dem Eckbereich (13) Wandabschnitte aneinanderstoßen, die den ersten und den zweiten Behältersumpf (7, 8) begrenzen.

3. Tankbehälter (1) nach Anspruch 1 oder 2, **dadurch gekennzeichnet, dass** in dem Eckbereich (13) die erste Bodenöffnung (9) und die Wandöffnung (11) benachbart zueinander angeordnet sind.

4. Tankbehälter (1) nach mindestens einem der vorangehenden Ansprüche, **dadurch gekennzeichnet, dass** die Wandöffnung (11) in einem aufrechtstehenden Wandabschnitt (12) der Teilungswand (4) angeordnet ist.

5. Tankbehälter (1) nach mindestens einem der vorangehenden Ansprüche, **dadurch gekennzeichnet, dass** die erste Bodenöffnung (9) und die Wandöffnung (11) wenigstens hinsichtlich eines Öffnungsparameters aus der folgende Gruppe gleich ausgebildet sind: Umfangsform und Öffnungsfläche.

6. Tankbehälter (1) nach mindestens einem der vorangehenden Ansprüche, **dadurch gekennzeichnet, dass** das Verschlussbauteil (15) wenigstens einer der folgenden Ausgestaltungen entsprechend ausgeführt ist:
- in der ersten Stellung überlappt das Verschlussbauteil (15) zum Dichten um die erste Bodenöffnung (9) herum mehrseitig mit einem die erste Bodenöffnung (9) umgebenden Rand; und
- in der zweiten Stellung überlappt das Verschlussbauteil (15) zum Dichten um die Wandöffnung (11) herum mehrseitig mit einem die Wandöffnung (11) umgebenden Rand.

7. Tankbehälter (1) nach mindestens einem der vorangehenden Ansprüche, **dadurch gekennzeichnet, dass** das Verschlussbauteil (15) mit einer Verschlussplatte gebildet ist.

8. Tankbehälter (1) nach mindestens einem der vorangehenden Ansprüche, **dadurch gekennzeichnet, dass** dem Verschlussbauteil (15) eine Sicherungseinrichtung (16) zugeordnet ist, mit der das Verschlussbauteil (15) in der ersten und / oder der zweiten Stellung gegen ein unbeabsichtigtes Lösen aus der jeweiligen Stellung gesichert werden kann.

9. Tankbehälter (1) nach mindestens einem der vorangehenden Ansprüche, **dadurch gekennzeichnet, dass** an dem Verschlussbauteil (15) eine Griffeinrichtung angeordnet ist.

10. Sämaschine, mit einem Tankbehälter (1) nach mindestens einem der vorangehenden Ansprüche.

## Claims

1. A hopper (1) for a seed drill, having:
- a hopper wall (2) surrounding a hopper volume (3) on multiple sides;
- a partition wall (4), which is arranged in the hopper volume (3), separating it into partial volumes, such that a first and a second partial volume (5, 6) are formed, which are separated from each other by means of the partition wall (4), and are each configured for receiving a granular material such as seed grains, fertilizers or the like;
- a first sump (7), which is associated with a first bottom opening (9) in the region of the first partial volume (5) and is configured for discharging the granular material in the first partial volume (5) from the hopper volume;
- a second sump (8), which is associated with a second bottom opening (10) in the region of the second partial volume (6) and is configured for discharging the granular material in the second partial volume (6) from the hopper volume (3);
- a wall opening (11) in the partition wall (4), through which the granular material can pass from the first to the second partial volume (5, 6) and vice versa when the wall opening (11) is open; and
- a closure member (15), which is supported in a pivotable manner in a corner region (13) in which the partition wall (4) meets a bottom of the hopper wall (2), and which can be pivoted between a first and a second position, such that the closure member (15)
- opens the first bottom opening (9) and closes the wall opening (11) when it is displaced from the first to the second position, and
- opens the wall opening (11) and closes the first bottom opening (9) when it is displaced from the second to the first position;
**characterized in that** the partition wall (4) has a displaceable wall section (4a), which forms an upper part of the partition wall (4), which upper part is arranged adjacent to an opening of the hopper (1) located on the deck side, and which, by means of displacing it between a first and a second displacement position, can change a volume ratio between the first and the second partial volume (5, 6).

2. The hopper (1) according to claim 1, **characterized in that** wall sections meet in the corner region (13), which wall sections delimit the first and the second sump (7, 8).

3. The hopper (1) according to claim 1 or 2, **characterized in that** the first bottom opening (9) and the wall opening (11) are arranged adjacent to each other in the corner region (13).

4. The hopper (1) according to at least one of the preceding claims, **characterized in that** the wall opening (11) is arranged in an upright wall section (12) of the partition wall (4).

5. The hopper (1) according to at least one of the preceding claims, **characterized in that** the first bottom opening (9) and the wall opening (11) are designed identically at least with respect to one opening parameter from the following group: circumferential shape and opening area.

6. The hopper (1) according to at least one of the preceding claims, **characterized in that** the closure member (15) is designed according to at least one of the following embodiments:
- in the first position, the closure member (15) overlaps an edge surrounding the first bottom opening (9) on multiple sides for creating a seal around the first floor opening (9); and
- in the second position, the closure member (15) overlaps an edge surrounding the wall opening (11) on multiple sides for creating a seal around the wall opening (11).

7. The hopper (1) according to at least one of the preceding claims, **characterized in that** the closure member (15) is formed having a closure plate.

8. The hopper (1) according to at least one of the preceding claims, **characterized in that** the closure member (15) is associated with a securing device (16) with which the closure member (15) in the first and/or the second position can be secured against an unintentional release from the respective position.

9. The hopper (1) according to at least one of the preceding claims, **characterized in that** a handle device is arranged on the closure member (15).

10. A seed drill, with a hopper (1) according to at least one of the preceding claims.

## Revendications

1. Conteneur-citerne (1) pour un semoir, comprenant :
- une paroi de conteneur (2), qui entoure sur plusieurs faces un volume de conteneur (3) ;
- une paroi séparatrice (4), qui est placée dans le volume de conteneur (3), divise celui-ci en volumes partiels, de telle sorte que soient créés un premier et un deuxième volumes partiels (5, 6), lesquels sont séparés les uns des autres au moyen de la paroi séparatrice (4) et sont aménagés pour recevoir chacun une matière granuleuse, comme des graines, des fertilisants ou similaires ;
- une première cuve de conteneur (7), à laquelle est associée une première ouverture dans le fond (9) dans la zone du premier volume partiel (5) et laquelle est aménagée pour épandre la matière granuleuse se trouvant dans le premier volume partiel (5) hors du volume de conteneur ;
- une deuxième cuve de conteneur (8), à laquelle est associée une deuxième ouverture dans le fond (10) dans la zone du deuxième volume partiel (6) et laquelle est aménagée pour épandre la matière granuleuse se trouvant dans le deuxième volume partiel (6) hors du volume de conteneur (3) ;
- une ouverture de paroi (11) dans la paroi séparatrice (4), à travers laquelle la matière granuleuse peut arriver du premier dans le deuxième volume partiel (5, 6) et inversement, lorsque l'ouverture de paroi (11) est ouverte ; et
- un élément de fermeture (15), lequel est logé de manière pivotante dans une zone angulaire (13) dans laquelle la paroi séparatrice (4) bute contre un fond de la paroi de conteneur (2) et lequel est susceptible de pivoter entre une première et une deuxième position, de telle sorte que l'élément de fermeture (15)
- ouvre la première ouverture dans le fond (9) et ferme l'ouverture de paroi (11), lors de son déplacement de la première dans la deuxième position et
- ouvre l'ouverture de paroi (11) et ferme la première ouverture dans le fond (9), lors du déplacement de la deuxième dans la première position ;
**caractérisé en ce que** la paroi séparatrice (4) comporte un segment de paroi (4a) déplaçable, lequel forme une partie supérieure de la paroi séparatrice (4) qui est placée au voisinage d'une ouverture dans la face supérieure du conteneur-citerne (1) et au moyen du déplacement de laquelle entre une première et une deuxième positions de déplacement, un rapport volumétrique entre le premier et le deuxième volumes partiels (5, 6) est variable.

2. Conteneur-citerne (1) selon la revendication 1, **caractérisé en ce que** dans la zone angulaire (13), des segments de paroi qui délimitent la première et la deuxième cuves de conteneur (7, 8) butent l'un contre l'autre.

3. Conteneur-citerne (1) selon la revendication 1 ou 2, **caractérisé en ce que** dans la zone angulaire (13), la première ouverture dans le fond (9) et l'ouverture de paroi (11) sont placées au voisinage l'une de l'autre.

4. Conteneur-citerne (1) selon au moins l'une quelconque des revendications précédentes, **caractérisé en ce que** l'ouverture de paroi (11) est placée dans un segment de paroi (12) placé debout de la paroi séparatrice (4).

5. Conteneur-citerne (1) selon au moins l'une quelconque des revendications précédentes, **caractérisé en ce que** la première ouverture dans le fond (9) et l'ouverture de paroi (11) sont conçues de manière identique, au moins en ce qui concerne un paramètre d'ouverture du groupe suivant : forme périphérique et surface d'ouverture.

6. Conteneur-citerne (1) selon au moins l'une quelconque des revendications précédentes, **caractérisé en ce que** l'élément de fermeture (15) est réalisé selon au moins l'une des conceptions suivantes :
- dans la première position, pour assurer l'étanchéité autour de la première ouverture dans le fond (9), l'élément de fermeture (15) chevauche sur plusieurs côtés un bord entourant la première ouverture dans le fond (9) ; et
- dans la deuxième position, pour assurer l'étanchéité autour de l'ouverture de paroi (11), l'élément de fermeture (15) chevauche sur plusieurs côtés un bord entourant l'ouverture de paroi (11).

7. Conteneur-citerne (1) selon au moins l'une quelconque des revendications précédentes, **caractérisé en ce que** l'élément de fermeture (15) est formé avec une plaque de fermeture.

8. Conteneur-citerne (1) selon au moins l'une quelconque des revendications précédentes, **caractérisé en ce qu'**à l'élément de fermeture (15) est associé un système de blocage (16) à l'aide duquel, dans la première et/ou la deuxième position, l'élément de fermeture (15) peut être bloqué contre une désolidarisation intempestive hors de la position en question.

9. Conteneur-citerne (1) selon au moins l'une quelconque des revendications précédentes, **caractérisé en ce que** sur l'élément de fermeture (15) est placé un système de préhension.

10. Semoir, pourvu d'un conteneur-citerne (1) selon au moins l'une quelconque des revendications précédentes.
